# EUROPEAN PATENT APPLICATION

(11) **EP 3 637 083 A1**
(43) Date of publication of application: **15.04.2020**
(21) Application number: 19183188.2
(22) Date of filing: 28.06.2019
(51) Int. Cl.: G01M 15/12, B60W 30/00, F02B 61/00, G06N 3/08, G05B 23/02, F02D 41/00

(54) **FAILURE DIAGNOSIS METHOD FOR POWER TRAIN COMPONENTS**

(30) Priority: 11.10.2018 KR 20180121109
(71) Applicant: Hyundai Motor Company, Seoul 06797 (KR); Kia Motors Corporation, Seoul 06797 (KR)
(72) Inventor: LEE, Dong-Chul, 06797 Seoul (KR); JUNG, In-Soo, 06797 Seoul (KR)
(74) Representative: Isarpatent

(57) **Abstract**

A failure diagnosis method for power train components may include: establishing, by a server, a diagnosis model based on vibration big data indicative of failure of power train components; classifying and modeling, by the server, failed components among the power train components by using feature vectors extracted from the vibration big data; initiating, by a controller of a vehicle, failure diagnosis on power train components of the vehicle by an input command or setting of a driver; and diagnosing, by the controller of the vehicle, a failure of the power train components of the vehicle by comparing a feature vector corresponding to the power train vibration of the vehicle measured during the vehicle travels with the vibration big data modeled in the diagnosis model.

## Description

### CROSS-REFERENCE TO RELATED APPLICATION

This application claims priority to and the benefit of Korean Patent Application No. 10-2018-0121109, filed on October 11, 2018, the entire contents of which are incorporated herein by reference.

### FIELD

The present disclosure relates to a failure diagnosis method for power train components.

### BACKGROUND

The statements in this section merely provide background information related to the present disclosure and may not constitute prior art.

The human brain is made up of a number of nerve cells called neurons, each of which is linked to hundreds or thousands of other neurons through a linkage called synapse. Each neuron receives electrical and chemical signals from other neurons connected to it through a dendrite, and these signals are polymerized in a cell body. If a polymerized value is greater than a threshold, that is, the neuron-specific threshold, the neuron is activated to transmit its output to adjacent neurons via an axon. Information exchange between neurons is performed in parallel, and this information exchange function is enhanced by learning.

"Artificial Intelligence (AI)" is the highest superordinate concept in the technical structure of this field, in order to make computers or robots think and act like humans by imitating our human brain and neural networks.

Although the research on the control system based on the learning related to the artificial intelligence has been continuously carried out in the auto industry, until now, it has been applied only to the technology of combining the speaker recognition (voice recognition) technology and the mobile IT technology for vehicles.

In other words, the technologies are for navigation or audio manipulation mainly through voice recognition, and application manipulation through smartphone interlocking.

In general, since an automobile is made with tens of thousands of parts, it is not easy to identify the fault symptoms and accurately determine which part is failed among the enormous parts.

Therefore, if the failure diagnosis of automobile components is carried out using artificial intelligence based on deep learning, it will be possible to recognize and repair faulty components more accurately and quickly.

The foregoing is intended merely to aid in the understanding of the background of the present disclosure, and is not intended to mean that the present disclosure falls within the purview of the related art that is already known to those skilled in the art.

### SUMMARY

The present disclosure has been made to solve the above problems and to provide a failure diagnosis method for power train components of an automobile using artificial intelligence based on deep learning.

A failure diagnosis method for power train components according to the present disclosure may include: establishing, by a server, a diagnosis model based on vibration big data indicative of failure of power train components; classifying and modeling, by the server, failed components among the power train components by using feature vectors extracted from the vibration big data; initiating, by a controller of a vehicle, failure diagnosis on power train components of the vehicle by an input command or setting of a driver; and diagnosing, by the controller of the vehicle, a failure of the power train components of the vehicle by comparing a feature vector corresponding to power train vibration of the vehicle measured during traveling of the vehicle with the vibration big data modeled in the diagnosis model.

The diagnosing the failure of the power train components may be based on a failure probability of the power train components of the vehicle calculated through deep learning after data preprocessing of the feature vector on the power train vibration measured during traveling of the vehicle.

The method may further include performing a NVH (Noise, Vibration and Harshness) performance evaluation by applying a combustion control learning value when it is determined that the power train components of the vehicle are not failed.

In another form, the method may include performing, by an engine controller, an active combustion control by changing combustion control variables depending on the outcome of the NVH performance evaluation.

In other form, the method includes determining whether the NVH performance is improved or not by receiving the driver's evaluation result after performed the active combustion control.

The driver may be informed of the possibility of a failed component other than the power train components when the evaluation result from the driver indicates that the NVH performance is not improved.

The initiating failure diagnosis may be automatically performed after the vehicle travels a predetermined distance.

The driver may be informed that it is switched to a traveling mode to diagnose the failure of the power train components of the vehicle after initiating the failure diagnosis.

In accordance with the failure diagnosis method for power train components according to the present disclosure, by using the established deep learning model to diagnose failure according to power train vibration characteristics, it is possible to identify components that may be failed accurately and quickly.

Accordingly, failure diagnosis can be reduced or minimized and thus accurate and quick troubleshooting can be performed.

In addition, NVH performance can be improved through the active combustion control.

Further areas of applicability will become apparent from the description provided herein. It should be understood that the description and specific examples are intended for purposes of illustration only and are not intended to limit the scope of the present disclosure.

### DRAWINGS

In order that the disclosure may be well understood, there will now be described various forms thereof, given by way of example, reference being made to the accompanying drawings, in which:
FIG. 1 schematically shows a system configuration for implementing a failure diagnosis method for power train components;
FIG. 2 is a flowchart illustrating the failure diagnosis method for the power train components;
FIGS. 3A, 3B, and 3C respectively show an example of feature vector extraction by the developed deep learning model;
FIGS. 4A, 4B, and 4C respectively show a model establishing step in the configuration of the failure diagnosis method for the power train components;
FIGS. 5A, 5B, 5C, and 5D respectively show a failure diagnosis step in the configuration of the failure diagnosis method for the power train components;
FIG. 6 shows an example of the failure diagnosis results by FIG. 5A to 5D;
FIGS. 7A, and 7B show an active combustion control step in the configuration of the failure diagnosis method for the power train components; and
FIG. 8 shows an example of the active combustion control results by FIG. 7A and FIG. 7B.

The drawings described herein are for illustration purposes only and are not intended to limit the scope of the present disclosure in any way.

### DETAILED DESCRIPTION

The following description is merely exemplary in nature and is not intended to limit the present disclosure, application, or uses. It should be understood that throughout the drawings, corresponding reference numerals indicate like or corresponding parts and features.

Exemplary forms of the present disclosure may be modified in various forms and the range of the present disclosure should not be construed as limited to the exemplary forms detailed below. The present exemplary forms are provided to more fully describe the present disclosure to those skilled in the art. Thus, the shape, and the like of an element in a drawing can be exaggerated to emphasize a clearer description. It should be noted that the same components in each drawing are denoted by the same reference numerals. Detailed descriptions of known features and configurations that may unnecessarily obscure the gist of the present disclosure are omitted.

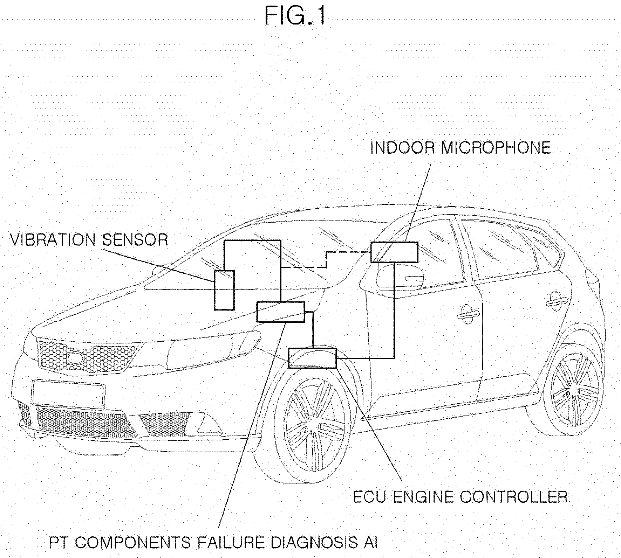

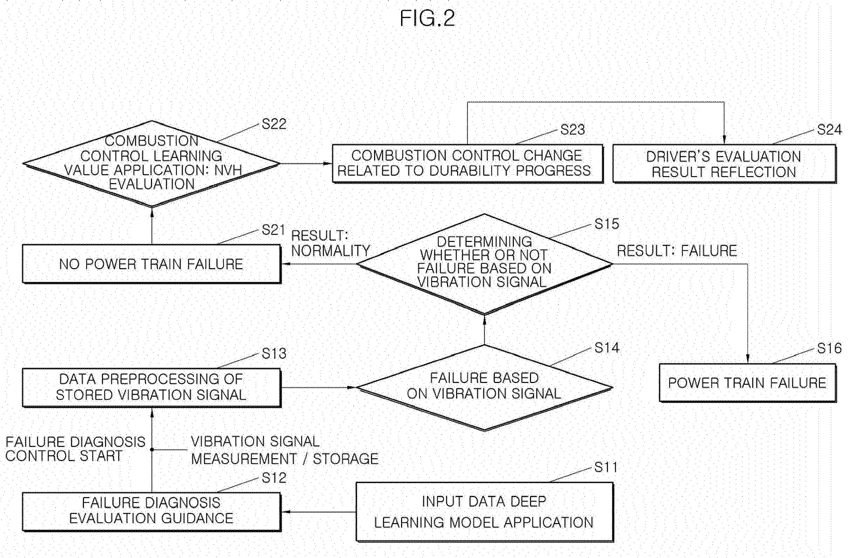

FIG. 1 schematically shows a system configuration for implementing a failure diagnosis method for a power train component in one form of the present disclosure; and FIG. 2 sequentially shows the failure diagnosis method the power train component according to one aspect of the present disclosure.

Hereinafter, referring to FIGS. 1 and 2, a failure diagnosis method for power train components will be described in detail.

In order to implement the failure diagnosis method for the power train component, a vehicle may be equipped with a vibration sensor, an indoor microphone, a failure diagnosis AI of the power train components, and an engine controller such as ECU (engine control unit).

A vibration signal of a power train may be extracted through the vibration sensor, and a pure power train characteristic signal may be determined based on the failure diagnosis AI of the power train components to diagnose whether the power train components is failed or not.

In addition, when a power train is not failed, the engine controller may perform an active combustion control to respond to NVH, and the indoor microphone measures a driver's voice command and an indoor NVH level. Further, it may be linked with speaker recognition technology to determine whether NVH is improved.

Here, the failure diagnosis AI of the power train components is referred to as an artificial intelligence controller which implements a power train failure diagnosis algorithm or may correspond to a learning model based on deep learning. The controller for the failure diagnosis algorithm may be embodied in a hardware manner (e.g., a processor), a software manner, or combination of the hardware and the software manner (i.e., a series of commands), which process at least one function or operation. The present Application uses a well-known controller (e.g., a processor or a series of commands) to process vibration big data of powertrain components.

The power train failure diagnosis learning model based on the deep learning may be developed by collecting the vibration big data that occurred during the development of the NVH performance in the power train development stage and collecting the vibration big data related to the failure generated in the field.

That is, information about the cause of the failure by type and vibration information big data may be collected to create a learning model based on the deep learning through a central server, and a feature vector learning model may be established for each type.

The central server may generate the feature vector learning model for each type of power train failure based on a high performance GPU, and classify and model the model by type for the type of power train, failure cause extraction and detailed failure components.

That is, the failure diagnosis method for power train components according to the present disclosure may include a diagnosis model establishing step, a failure diagnosis initiating step, a failure diagnosis step and an active combustion control step, and will be described sequentially through FIG. 2.

At the laboratory level, a deep learning model may be applied, which is established by the input of the engine driving condition determination signal such as a power train vibration signal and a RPM by the diagnosis model establishing step S11.

Further, the guidance for failure diagnosis initiation may be performed S12.

The failure diagnosis initiation may allow the driver to directly input the initiation command, which a voice recognition technology may be applied to.

In addition, it may automatically initiated after traveling a certain travel distance based on a travel distance and guide the failure diagnosis entrance to a driver.

The guidance of the failure diagnosis initiation may include traveling mode (RPM and acceleration condition, and so on) switching guidance for power train failure diagnosis.

When the failure diagnosis control is initiated after the guidance, a failure diagnosis AI of power train components may receive and store the vibration signal measured by the vibration sensor and preprocess the stored vibration signal as data S13.

The data preprocessing may perform Time/Amplitude/Frequency formatting algorithm (Normalization) to apply a failure diagnosis learning model and perform data processing by applying Zero Padding and white nose.

The failure diagnosis may be performed based on the deep learning model developed after the data preprocessing S14.

That is, depending on whether the preprocessed vibration signal of the power train during current traveling is corresponded to any one of the atypical signals of the power train based on abnormal vibration big data by components collected in the diagnosis model establishing step or not, it may be determined that the power train is failed S16 or the power train is not failed S21.

When the failure is determined, a probability such as the first grade, second grade and third grade results may be output, and the information related to follow-up actions for repair request items such as service urgency grade and cycle may be provided.

When the power train is not failed in the step 21, for NVH (Noise, Vibration and Harshness) problems recognized by the driver, it may be determined whether the NVH has deteriorated due to the durability progress.

For this, the NVH evaluation may be performed by applying the combustion control learning value S22.

Depending on the evaluation results of the step S22, the active combustion control may be performed by changing the combustion control related to the durability progress S23.

The combustion control learning value also may depend on the NVH model learned in the development stage, and the improvement work may be completed to target NVH level depending on optimal combination of combustion control variables by applying this.

Further, after performing the change of the combustion control as like this, the evaluation result of the driver may be reflected S24.

That is, the satisfaction and dissatisfaction through evaluation input such as driver's voice recognition may be determined, and the change to the control variables proposed by the step S23 may be maintained when it is satisfied, but it may be guided that there is a possibility that a component other than the power train may be failed so that a careful inspection can be performed, when it is dissatisfied.

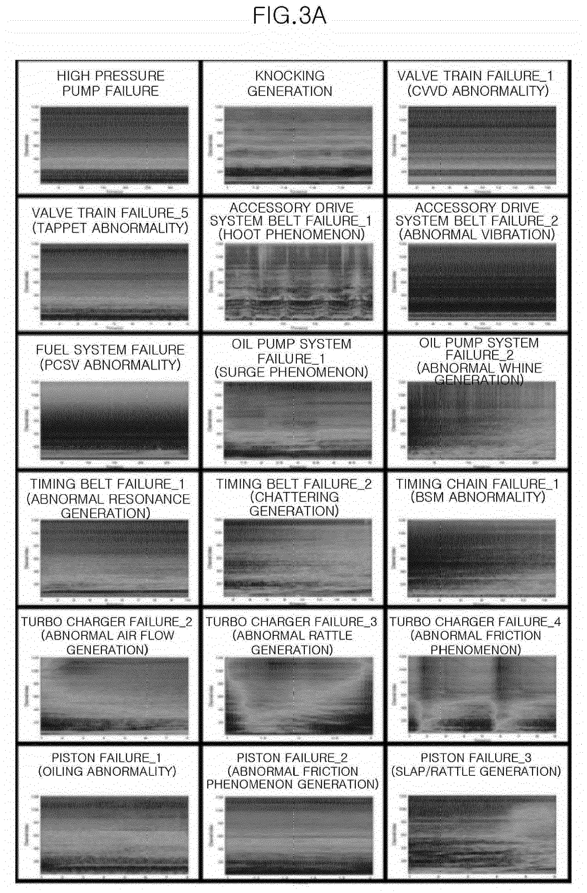

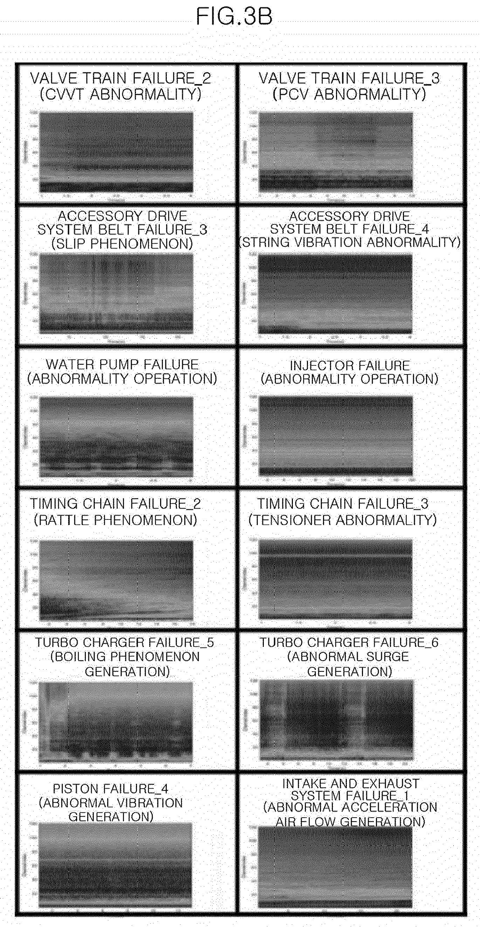

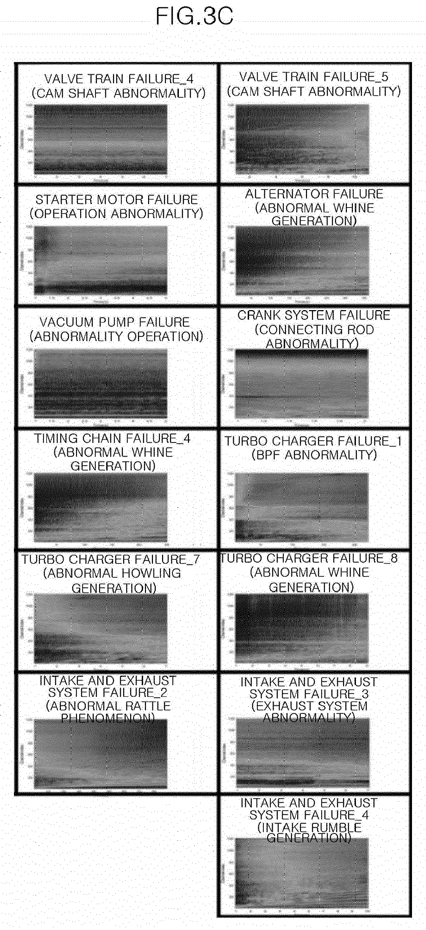

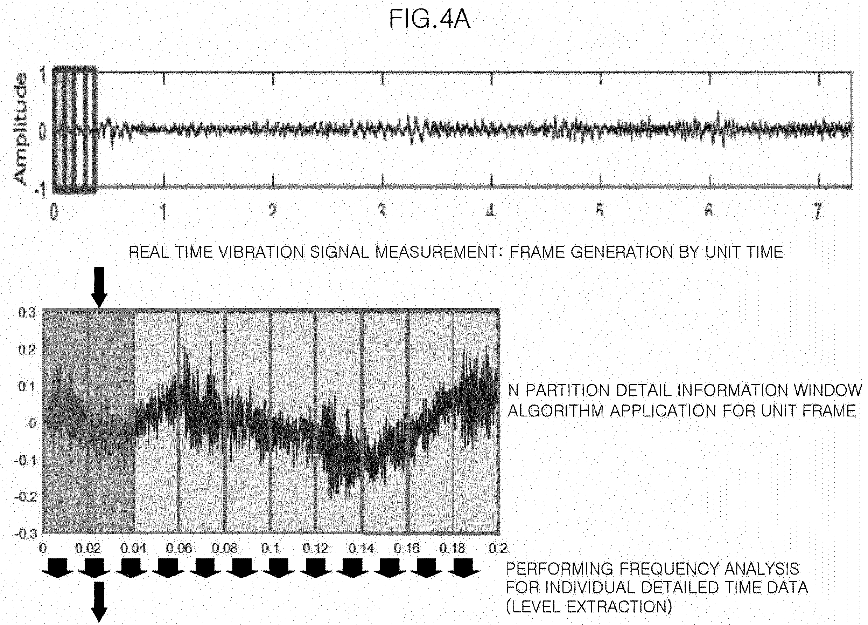

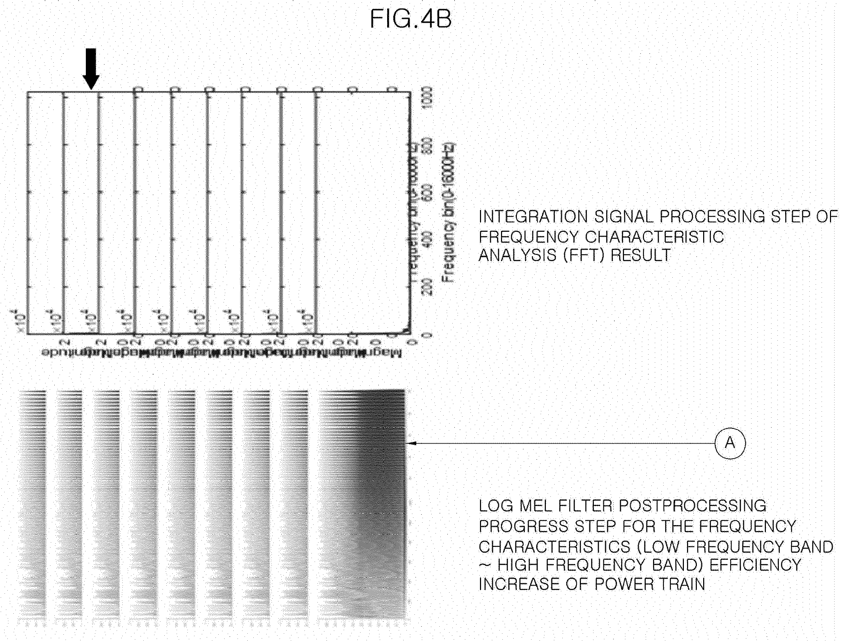

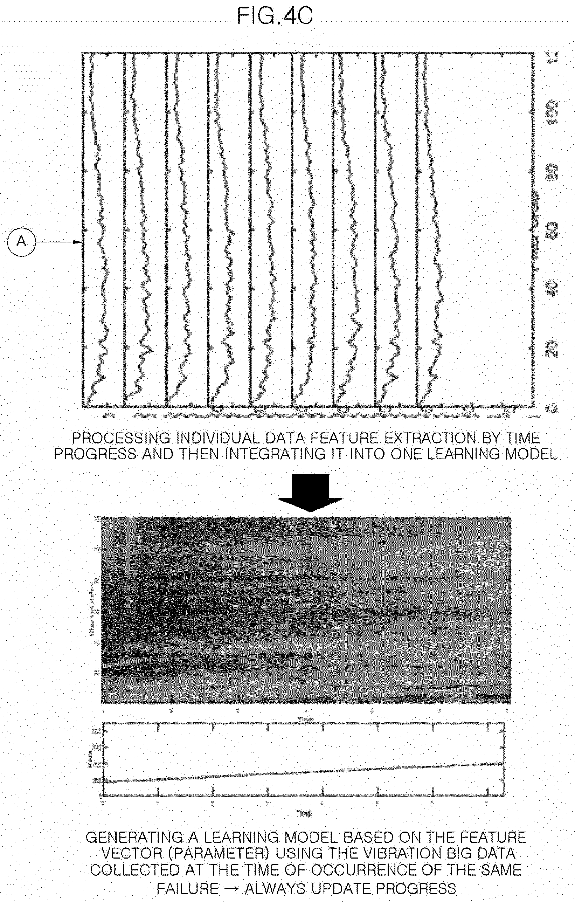

Describing in more detail by steps, the diagnosis model establishing step may be modeled by the same process as FIG. 3A to FIG. 3C. As a result, first, the feature vector by the deep learning model may be extracted as shown in FIG. 4A to 4C.

The diagnosis model establishing may generate a frame by unit time by measuring the real time vibration signal firstly.

In addition, the N partition detail information window algorithm for unit frame may be applied.

Then, the frequency analysis for each detailed time data (level extraction) may be performed, and the Log Mel filter postprocessing for the frequency characteristics (low frequency band ∼ high frequency band) efficiency increase of the power train may be performed.

Further, after processing an individual data feature extraction by time progress, it may be integrated into one learning model.

A learning model based on the feature vector (parameter) using the vibration big data collected at the time of occurrence of the same failure shape may generated, which may be always updated.

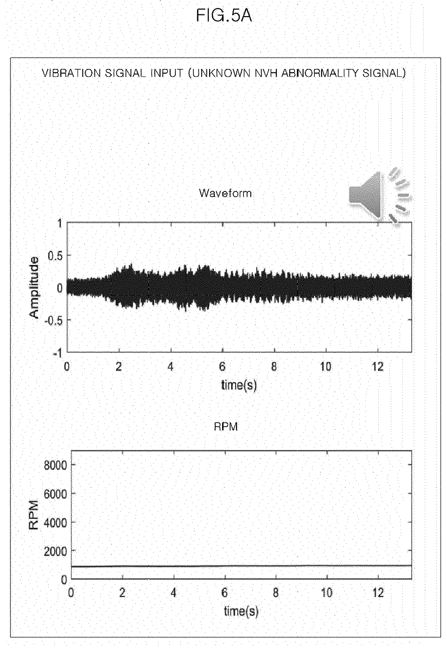

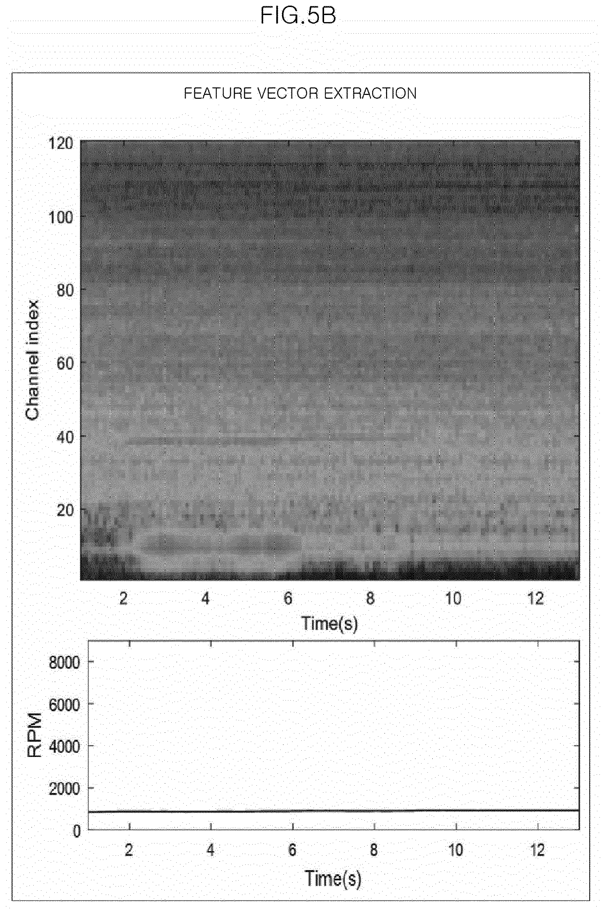

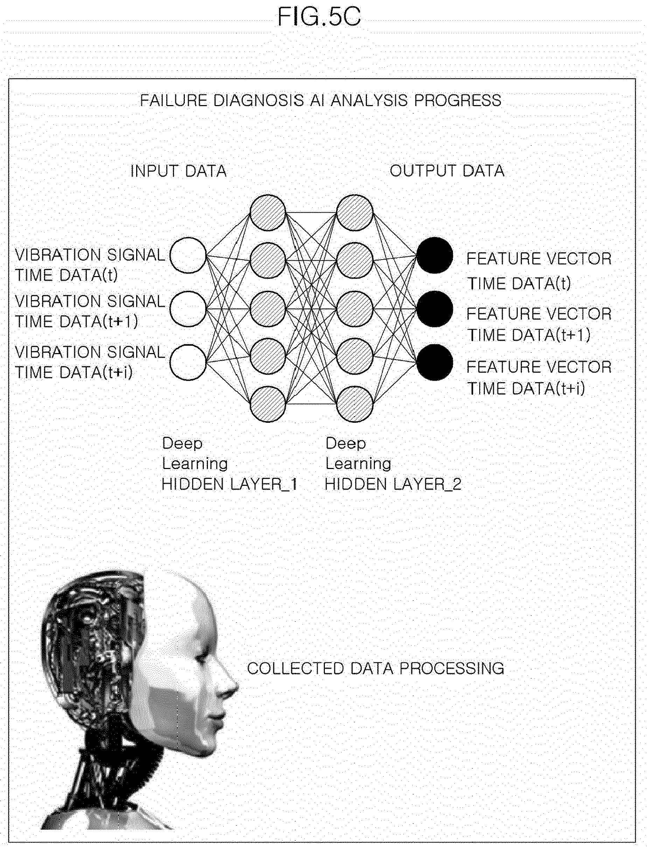

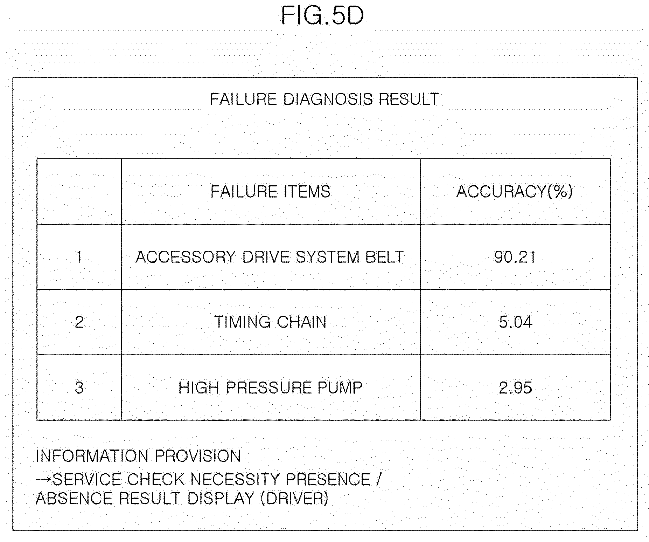

The failure diagnosis step, as referenced in FIG. 5A to FIG. 5D, may extract the feature vector when an abnormal signal of an unknown NVH is input during traveling, and perform the failure diagnosis AI analysis to derive a failure diagnosis result and provide the derived information.

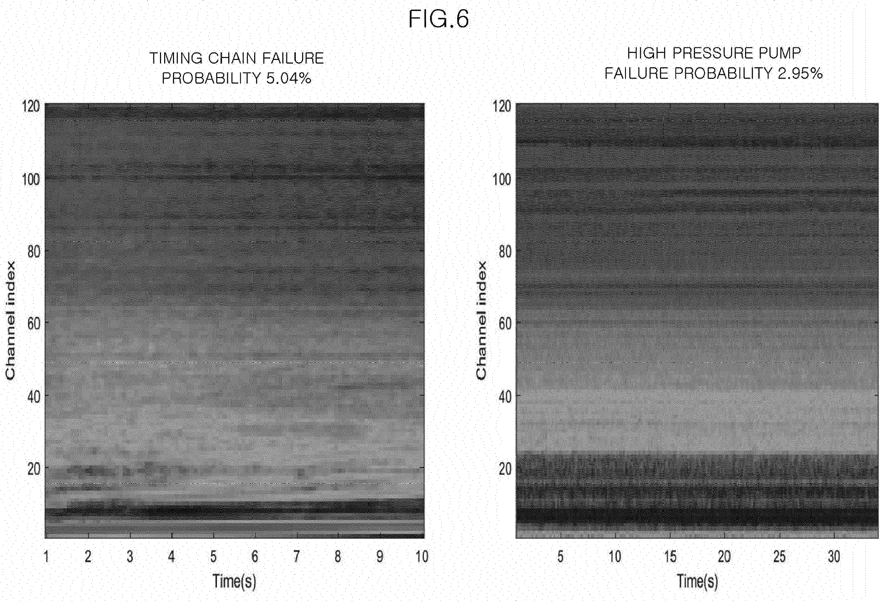

As also referenced in FIG. 6, the failure items and probability may be provided.

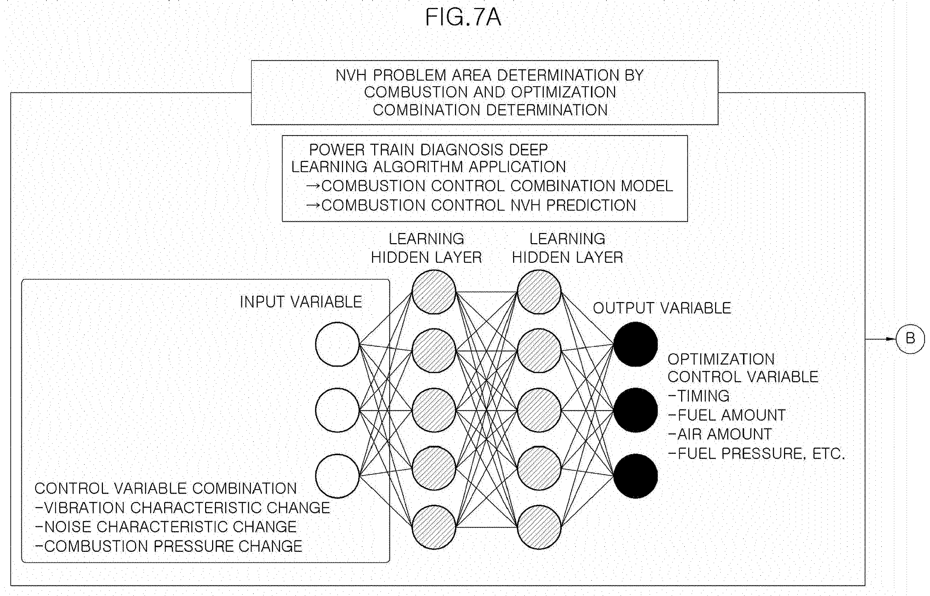

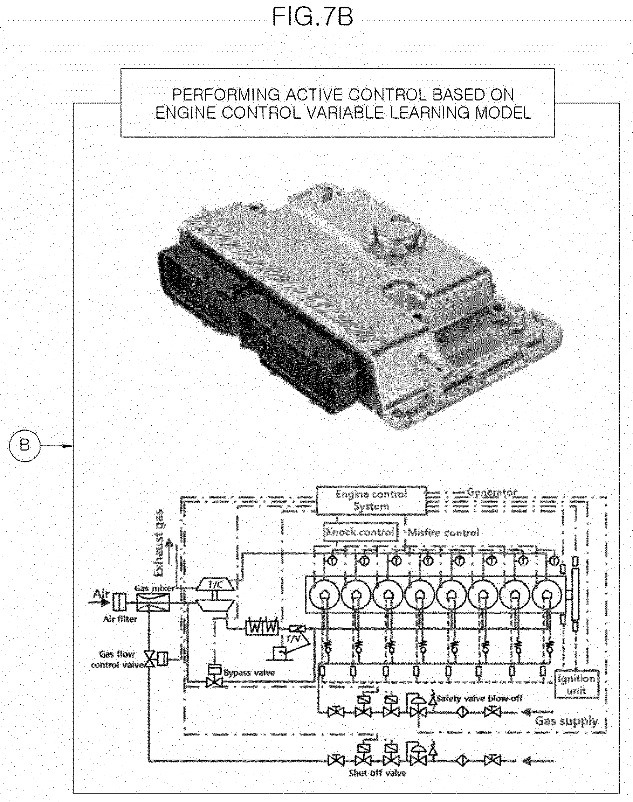

On the other hand, when it is determined that the power train is not failed by the step S21, as referenced in FIG. 7A and FIG. 7B, the NVH problem area by the combustion and optimization combination may be determined to perform the active control of the engine control variables.

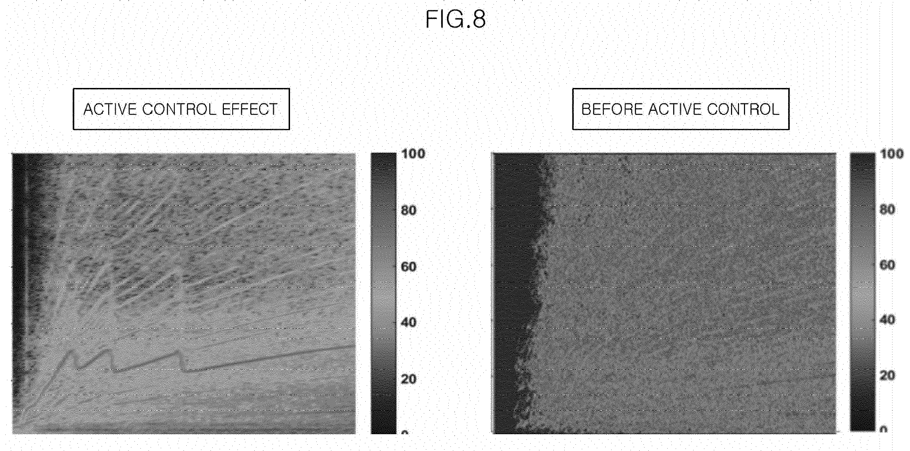

FIG. 8 shows that the NVH performance is improved as a result of such active combustion control.

As described above, the present disclosure collects the big data of power train vibration that occurred during NVH performance development and models the feature vector of vibration by failure of each component type, and in the power train failure diagnosis, the deep learning is performed by the data in which the feature vector of the measured power train vibration is modeled to derive and guide failure probability by components, so that the failure diagnosis of the power train components can be achieved more quickly and accurately.

Although the present disclosure has been described with reference to the drawings, it is to be understood that the present disclosure is not limited to the disclosed exemplary forms, and it will be apparent to those skilled in the art that various changes and modifications may be made without departing from the spirit and scope of the present disclosure.

## Claims

1. A failure diagnosis method for power train components, comprising:
establishing, by a server, a diagnosis model based on vibration big data indicative of failure of power train components ;
classifying and modeling, by the server, failed components among the power train components by using feature vectors extracted from the vibration big data;
initiating, by a controller of a vehicle, failure diagnosis on power train components of the vehicle by an input command or a setting of a driver; and
diagnosing, by the controller, a failure of the power train components of the vehicle by comparing a feature vector corresponding to power train vibration of the vehicle measured during traveling of the vehicle with the vibration big data modeled in the diagnosis model.

2. The failure diagnosis method of claim 1, wherein diagnosing failure of the power train components is based on a failure probability of the power train components of the vehicle calculated through deep learning after data preprocessing of the feature vector on the power train vibration measured during traveling of the vehicle.

3. The failure diagnosis method of claim 2, further comprising: performing a Noise, Vibration and Harshness (NVH) performance evaluation by applying a combustion control learning value when it is determined that the power train components of the vehicle are not failed.

4. The failure diagnosis method of claim 3, further comprising: performing, by an engine controller, an active combustion control by changing combustion control variables based on an outcome of the NVH performance evaluation.

5. The failure diagnosis method of claim 4, further comprising: determining whether the NVH performance is improved or not by receiving an evaluation result from a driver after performed the active combustion control.

6. The failure diagnosis method of claim 5, wherein the driver is informed of a possibility of a failed component other than the power train components when the evaluation result from the driver indicates that the NVH performance is not improved.

7. The failure diagnosis method of claim 1, wherein initiating the failure diagnosis is automatically performed after the vehicle travels a predetermined distance.

8. The failure diagnosis method of claim 7, wherein a driver of the vehicle is informed that it is switched to a traveling mode to diagnose the failure of the power train components of the vehicle after initiating the failure diagnosis.
